**Europäisches Patentamt**

(19) **European Patent Office**

**Office européen des brevets**

(11) Veröffentlichungsnummer: **0 247 567**
**B1**

# (12) EUROPÄISCHE PATENTSCHRIFT

(45) Veröffentlichungstag der Patentschrift:
**19.09.90**

(51) Int. Cl.⁵: **G01D 5/14**

(21) Anmeldenummer: **87107605.5**

(22) Anmeldetag: **25.05.87**

(54) **Absolute Winkelmessvorrichtung.**

(30) Priorität: **28.05.86 DE 3617885**

(43) Veröffentlichungstag der Anmeldung:
**02.12.87 Patentblatt 87/49**

(45) Bekanntmachung des Hinweises auf die Patenterteilung:
**19.09.90 Patentblatt 90/38**

(84) Benannte Vertragsstaaten:
**AT BE CH DE ES FR GB IT LI NL SE**

(56) Entgegenhaltungen:
**DE-B- 1 276 346**
**FR-A- 2 151 336**
**FR-A- 2 341 838**
**GB-A- 1 175 606**
**US-A- 3 824 455**

(73) Patentinhaber: **Siemens Aktiengesellschaft,
Wittelsbacherplatz 2, D-8000 München 2(DE)**
Patentinhaber: **Bayerische Motoren Werke
Aktiengesellschaft, Patentabteilung
AJ-30 Postfach 40 02 40 Petuelring 130,
D-8000 München 40(DE)**

(72) Erfinder: **Golker, Walter, Pfundmayerstrasse 25,
D-8000 München 70(DE)**
Erfinder: **Nagy, Imre, Herderstrasse 16,
D-8057 Eching(DE)**

(74) Vertreter: **Fuchs, Franz-Josef, Dr.-Ing. et al,
Postfach 22 13 17, D-8000 München 22(DE)**

ACTORUM AG

**Beschreibung**

Die Erfindung betrifft eine absolute Winkelmeßvorrichtung zur Bestimmung der Winkelstellung einer drehbaren Welle mit einem an die Welle ankuppelbaren Rotor, welcher eine sich mit ihm drehende Dauermagnetanordnung mit zwei bezüglich der Drehachse diametral gegenüberliegenden Polen aufweist und dessen Winkelstellung durch einen Magnetfeldfühler abgetastet wird, wobei das abgetastete Signal über eine Auswerteschaltung in einen Winkelmeßwert umgesetzt und dieser dann ausgegeben wird.

Zur Winkelmessung an drehbaren Wellen sind verschiedene Systeme bekannt. Beispielsweise sind hierzu Drehmelder, also Drehtransformatoren im Phasenschieberbetrieb, geeignet, wobei die dem Drehwinkel des Rotors proportionale Phasenverschiebung der Ausgangsspannung ausgewertet wird.

Weiterhin gibt es zur Winkelmessung sogenannte Winkelcodierer, bei denen mit dem Rotor eine Codescheibe verbunden ist, die ihrerseits mechanisch, optoelektronisch, magnetisch oder induktiv abgetastet wird.

Alle diese Geräte können bei entsprechender Auslegung eine Winkelstellung mit hoher Präzision messen, sie sind jedoch in der Herstellung sehr aufwendig und damit teuer, so daß sie für verschiedene Einsatzzwecke nicht in Betracht kommen. Daneben gibt es auch einfachere Geräte, wie Potentiometer, deren Ausgangsspannung digitalisiert wird. Solche und ähnliche Geräte sind aber wiederum für bestimmte Einsatzzwecke nicht robust genug.

Eine Winkelmeßvorrichtung der eingangs genannten Art ist aus der US-A-3 824 455 bekannt, wobei ein Stator und ein Rotor ineinander gelagert sind und in dem Stator zwei getrennt befestigte Einzelmagneten ein Magnetfeld erzeugen. Der Rotor besitzt auf einer im Stator befindlichen Stange zwei getrennt und versetzt angeordnete Hallsonden, deren Ausgangssignale jeweils Sinus- und Cosinuswerte des Winkels liefern.

In der DE-B-1 276 346 ist weiterhin eine Winkelmeßvorrichtung beschrieben, die ebenfalls Hallgeneratoren als Fühlerelemente verwendet. Auch dort ist der Rotor mit einer Dauermagnetanordnung versehen, wobei allerdings ein zusätzlicher Rückleitungsring verwendet ist, um zwischen Dauermagnet und Rückleitungsring einen Ringspalt zu bilden, in welchen die auf einem rohrförmigen Träger des Rotors angeordneten Hallgeneratoren hineinragen.

In beiden Fällen sind also Hallelemente als Meßfühler verwendet, wobei vor allem die Schwierigkeit besteht, für die jeweils zwei oder mehr Hallgeneratoren jeweils Elemente mit genau gleichen Eigenschaften, wie Temperaturgang usw., auszuwählen.

Aufgabe der Erfindung ist es, eine absolute Winkelmeßvorrichtung der eingangs genannten Art zu schaffen, die mit einfachen Teilen billig herzustellen ist und aufgrund ihres Arbeitsprinzips robust, d. h. weitgehend unempfindlich gegenüber Umwelteinflüssen, ist.

Erfindungsgemäß wird diese Aufgabe bei einer Winkelmeßvorrichtung der eingangs genannten Art dadurch gelöst, daß der Rotor ein topfförmiger Drehkörper ist, in welchem die Dauermagnetanordnung in Form eines zweipolig aufmagnetisierten Dauermagnetringes konzentrisch angeordnet ist, und daß als Magnetfeldfühler eine als elektronischer Kompaß ausgebildete Magnetfeldsonde dient, welche mit zwei über einem Kernblech angebrachten Wicklungen die zueinander senkrecht stehenden Komponenten eines Magnetfeldes mißt und welche im Bereich zwischen den beiden Dauermagnetpolen angeordnet und an der offenen Seite des Rotors mit einem Gehäuse fest verbunden ist.

Magnetfeldsonden sind zur Richtungsbestimmung in der Funktion als elektronischer Kompaß seit langem bekannt. Sie werden üblicherweise derart eingesetzt, daß sie die Horizontalkomponenten des Erdmagnetfeldes messen und daraus die jeweilige Richtung, beispielsweise eines Fahrzeuges gegenüber dem magnetischen Nordpol der Erde, bestimmen. Eine solche Magnetfeldsonde ist beispielsweise in der DE-A-29 46 640, eine entsprechende Auswerteschaltung in der EP-A-00 65 762 beschrieben. Solche Magnetfeldsonden sind sehr einfach im Aufbau. Sie sind deshalb sehr einfach in der Herstellung und robust für die Anwendung, da sie keine bewegten Teile aufweisen. Da die erfindungsgemäße Winkelmeßvorrichtung zu dieser Magnetfeldsonde lediglich eine Dauermagnetanordnung für den Rotor benötigt, ergibt sich ein sehr einfacher Gesamtaufbau, der auch weitgehend unempfindlich gegen äußere Einflüsse, wie Verunreinigungen, Temperaturschwankungen und mechanische Erschütterungen, ist. Es muß lediglich sichergestellt werden, daß das Dauermagnetfeld nicht durch das Erdmagnetfeld oder durch sonstige äußere Magnetfelder gestört wird. Soweit die Winkelmeßvorrichtung nicht ohnehin in einem abgeschirmten Raum betrieben wird, kann eine solche Abschirmung auf einfache Weise durch ein Gehäuse aus weichmagnetischem Material erzielt werden.

Der topfförmige Rotor, in welchem der Dauermagnetring befestigt ist, besteht vorzugsweise aus nicht ferromagnetischem Material; es ist jedoch auch eine Ausführungsform aus ferromagnetischem Material denkbar.

Als Dauermagnetanordnung dient zweckmäßigerweise ein Dauermagnetring, welcher konzentrisch mit dem Rotor verbunden und zweipolig aufmagnetisiert ist. Der Rotor kann ein topfförmiger Drehkörper aus ferromagnetischem oder nicht ferromagnetischem Material sein, in welchem der Dauermagnetring konzentrisch befestigt ist. Im Prinzip wäre auch die Verwendung von zwei Einzelmagneten möglich, die in geeigneter Weise an einem ferromagnetischen Rotor befestigt sind.

Je nach Anwendungsfall kann der Rotor selbst über eine eigene Lagerwelle im Gehäuse gelagert sein, wobei die Ankuppelung an die zu messende Drehwelle außerhalb des Gehäuses vorgenommen wird. Andernfalls ist es aber auch möglich, den Rotor ohne eigene Lagerung im Gehäuse vorzusehen, wobei er dann im Einsatzfall unmittelbar an die zu messende Drehwelle angekuppelt wird.

Die Erfindung wird nachfolgend an Ausführungsbeispielen anhand der Zeichnung näher erläutert. Es zeigen

Fig. 1 und 2 eine erfindungsgemäß gestaltete Winkelmeßvorrichtung mit Eigenlagerung des Rotors in Schnittdarstellung und in Vorderansicht bei offenem Gehäuse,

Fig. 3 eine etwas abgewandelte Ausführungsform mit fremdgelagertem Rotor, ebenfalls in Schnittdarstellung.

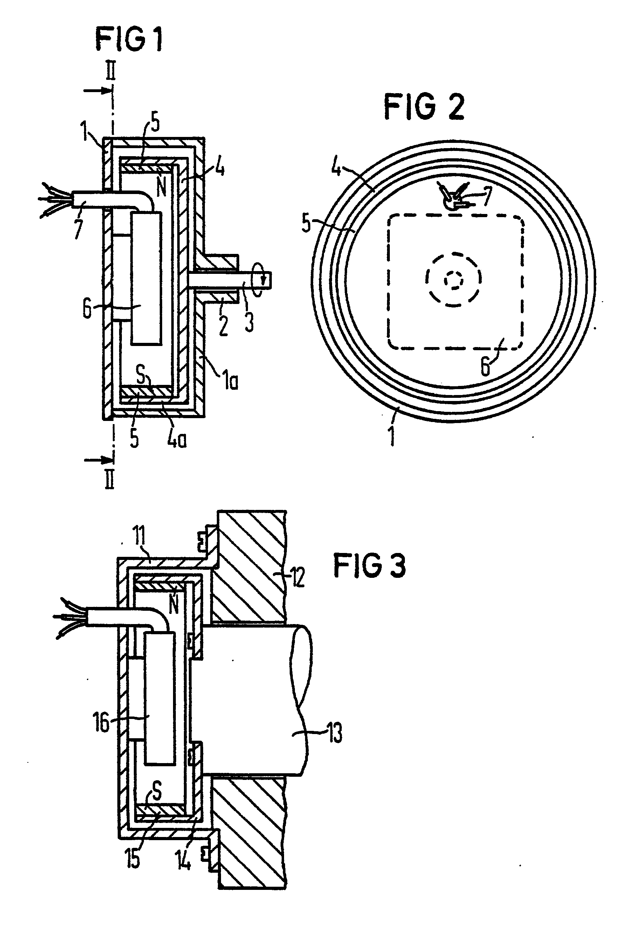

Die in Fig. 1 und 2 dargestellte Winkelmeßvorrichtung besitzt ein Gehäuse 1 aus ferromagnetischem Material. Dieses Gehäuse besitzt die Form eines Hohlzylinders mit geschlossenen Stirnseiten, wobei an der Stirnseite 1a eine Lagerbuchse 2 für die Lagerwelle 3 eines Rotors 4 angeformt ist. Dieser Rotor 4 ist topfförmig gestaltet und kann sich in dem Gehäuse 1 um die Achse der Lagerwelle 3 drehen. Der Rotor 4 ist aus nichtferromagnetischem Material gefertigt, doch käme auch die Verwendung ferromagnetischen Materials in Betracht. Innerhalb des Rotors ist ein Dauermagnetring 5 angebracht und fest mit dem Mantel 4a des Rotors verbunden. Der Dauermagnetring ist so magnetisiert, daß zwei entgegengesetzte Pole bezüglich der Lagerachse der Welle 3 einander gegenüberstehen und so ein Dauermagnetfeld innerhalb des Rotors erzeugen, welches sich mit dem Rotor mitdreht.

Im Bereich innerhalb des Dauermagnetrings 5 ist außerdem eine Magnetfeldsonde 6 angeordnet und fest mit dem Gehäuse 1 verbunden. Mit dieser Magnetfeldsonde 6 kann durch Messung zweier zueinander senkrecht stehender Feldkomponenten jeweils die Feldlinienrichtung des Dauermagnetfeldes gemessen werden, woraus wiederum die Winkelstellung des Dauermagnetrings 5 des Rotors 4 abgeleitet werden kann. Die Meßsignale der Magnetfeldsonde 6 werden über eine Leitung 7 aus dem Gehäuse 1 heraus zu einer Auswerteschaltung geführt, die die ermittelten Winkelstellungswerte in digitaler Form ausgibt.

Durch das weichmagnetische Gehäuse 1 wird der Einfluß des Erdmagnetfeldes und auch sonstiger magnetischer Störfelder ausgeschaltet. Anstelle des dargestellten Dauermagnetrings könnte natürlich auch eine andere Dauermagnetanordnung mit dem Rotor verbunden sein, beispielsweise in Form zweier Einzelmagneten, die ein mit dem Rotor mitdrehendes Dauermagnetfeld an der Magnetfeldsonde erzeugt.

Fig. 3 zeigt eine leicht abgewandelte Ausführungsform der Winkelmeßvorrichtung. In diesem Fall wird ein einseitig offenes Gehäuse 11 verwendet, welches an einen Lagerflansch 12 einer Vorrichtung mit drehbar gelagerter Welle 13 angesetzt und mit diesem verbunden werden kann. Der Rotor 14 besitzt in diesem Fall keine eigene Lagerwelle, vielmehr wird er unmittelbar mit der Welle 13 verbunden, deren Winkelstellung gemessen werden soll. Ein Dauermagnetring 15 und eine Magnetfeldsonde 16 sind in diesem Fall in gleicher Weise aufgebaut und angeordnet wie im Beispiel der Fig. 1.

Während also bei der Ausführungsform von Fig. 1 die eigene Lagerwelle 3 des Rotors für den Meßeinsatz extern über eine Kupplung mit der zu messenden Welle verbunden werden muß, wird beim Beispiel der Fig. 3 der Rotor 14 unmittelbar mit der zu messenden Welle 13 verbunden. Für die Funktion ergibt sich dadurch jedoch kein Unterschied.

In jedem Fall ist es zweckmäßig, das Magnetfeld der Dauermagnetanordnung 5 bzw. 15 in dem Rotor 4 bzw. 14 so stark auszulegen, daß äußere Magnetfeldeinflüsse, beispielsweise des Erdmagnetfeldes, die Messung nicht verfälschen, soweit diese äußeren Einflüsse nicht ohnehin durch das ferromagnetische Abschirmgehäuse ausgeschaltet werden.

**Patentansprüche**

1. Absolute Winkelmeßvorrichtung zur Bestimmung der Winkelstellung einer drehbaren Welle (3; 13) mit einem an die Welle ankuppelbaren Rotor (4; 14), welcher eine sich mit ihm drehende Dauermagnetanordnung (5; 15) mit zwei bezüglich der Drehachse diametral gegenüberliegenden Polen (N, S) aufweist und dessen Winkelstellung durch einen Magnetfeldfühler (6; 16) abgetastet wird, wobei das abgetastete Signal über eine Auswerteschaltung in einen Winkelmeßwert umgesetzt und dieser dann ausgegeben wird, dadurch gekennzeichnet, daß der Rotor ein topfförmiger Drehkörper (4; 14) ist, in welchem die Dauermagnetanordnung in Form eines zweipolig aufmagnetisierten Dauermagnetringes (5; 15) konzentrisch angeordnet ist, und daß als Magnetfeldfühler eine als elektronischer Kompaß ausgebildete Magnetfeldsonde (6; 16) dient, welche mit zwei über einem Kernblech angebrachten Wicklungen die zueinander senkrecht stehenden Komponenten eines Magnetfeldes mißt und welche im Bereich zwischen den beiden Dauermagnetpolen angeordnet und an der offenen Seite des Rotors (4; 14) mit einem Gehäuse (1; 11) fest verbunden ist.

2. Winkelmeßvorrichtung nach Anspruch 1, dadurch gekennzeichnet, daß der Rotor (4; 14) aus nichtferromagnetischem Material besteht.

3. Winkelmeßvorrichtung nach Anspruch 1 oder 2, dadurch gekennzeichnet, daß der Rotor (4; 14) und die Magnetfeldsonde (6; 16) in einem ringsum geschlossenen Gehäuse (1; 11) aus weichmagnetischem Material angeordnet sind.

4. Winkelmeßvorrichtung nach Anspruch 3, dadurch gekennzeichnet, daß der Rotor (4) über eine Lagerwelle (3) im Gehäuse (1) gelagert ist.

5. Winkelmeßvorrichtung nach Anspruch 3, dadurch gekennzeichnet, daß der Rotor (14) ohne eigene Lagerung im Gehäuse (11) angeordnet und unmittelbar an die zu messende Welle (13) ankuppelbar ist.

**Claims**

1. Absolute angular measuring device for determining the angular position of a rotatable shaft (3; 13) having a rotor (4; 14) which can be coupled to the shaft, said rotor having a permanent magnet arrangement (5; 15), rotating with it, having two poles (N, S) arranged diametrically opposite each other on opposite sides of the axis of rotation and the angular position of said shaft being sensed by a magnetic field sensor (6; 16), the sensed signal being converted by an evaluation circuit into an angular measured value and the latter being then issued, characterized in that the rotor is a pot-shaped rotary body (4; 14), in which the permanent magnet arrangement in the form of a permanent magnetic ring (5; 15) magnetized in bipolar fashion is concentrically arranged, and in that a magnetic field probe (6; 16) constructed as an electronic compass serves as magnetic field sensor, said magnetic field probe measuring the components, situated perpendicularly to one another, of a magnetic field with two windings applied over a core plate and being arranged in the region between the two permanent magnetic poles and being permanently connected at the open side of the rotor (4; 14) to a housing (1; 11).

2. Angular measuring device according to Claim 1, characterized in that the rotor (4; 14) consists of nonferromagnetic material.

3. Angular measuring device according to Claim 1 or 2, characterized in that the rotor (4; 14) and the magnetic field probe (6; 16) are arranged in a housing (1; 11) which is completely enclosed and formed of low-retentivity material.

4. Angular measuring device according to Claim 3, characterized in that the rotor (4) is mounted on a bearing shaft (3) in the housing (1).

5. Angular measuring device according to Claim 3, characterized in that the rotor (14) is arranged in the housing (11) without its own bearing and can be directly coupled to the shaft (13) to be measured.

**Revendications**

1. Dispositif de mesure d'angles absolus servant à déterminer la position angulaire d'un arbre rotatif (3; 13) comportant un rotor (4; 14), qui peut être accouplé à l'arbre et possède un dispositif à aimant permanent (5; 15), qui tourne avec le rotor et possède deux pôles (N, S) diamétralement opposés par rapport à l'axe de rotation et dont la position angulaire est explorée par un capteur de champ magnétique (6; 16), le signal exploré étant converti par l'intermédiaire d'un circuit d'évaluation en une valeur de mesure angulaire, qui est ensuite délivrée, caractérisé par le fait que le rotor est un corps rotatif en forme de pot (4, 14), dans lequel le dispositif à aimant permanent est disposé concentriquement sous la forme d'un aimant permanent annulaire (5; 15) aimanté d'une manière bipolaire, et qu'on utilise comme capteur de champ magnétique une sonde magnétique (6; 16) réalisée sous la forme d'un compas électronique, qui mesure les composantes perpendiculaires entre elles d'un champ magnétique au moyen de deux enroulements disposés au-dessus d'une tôle formant noyau, est disposé dans la zone comprise entre les deux pôles de l'aimant permanent et est relié rigidement à un boîtier (1; 11), au niveau du côté ouvert du rotor (4; 14).

2. Dispositif de mesure d'angles suivant la revendication 1, caractérisé par le fait que le rotor (4; 14) est réalisé en un matériau non ferromagnétique.

3. Dispositif de mesure d'angles suivant la revendication 1 ou 2, caractérisé par le fait que le rotor (4; 14) et la sonde magnétique (6; 16) sont disposés dans un boîtier (1; 11) fermé de tous côtés et réalisé en un matériau magnétique doux.

4. Dispositif de mesure d'angles suivant la revendication 3, caractérisé par le fait que le rotor (4) est tourillonné dans le boîtier (4) au moyen d'un arbre de support (3).

5. Dispositif de mesure d'angles suivant la revendication 3, caractérisé par le fait que le rotor (14) est disposé sans système de tourillonnage propre dans le boîtier (1) et peut être accouplé directement à l'arbre (13), auquel s'applique la mesure.

# FIG 1

# FIG 2

# FIG 3